# EUROPÄISCHE PATENTSCHRIFT

(11) **EP 2 839 911 B1**
(45) Veröffentlichungstag und Bekanntmachung des Hinweises auf die Patenterteilung: **02.05.2018**
(21) Anmeldenummer: 14179961.9
(22) Anmeldetag: 06.08.2014
(51) Int. Cl.: B23D 29/00, B23D 21/00, B23D 29/02

(54) **Schneidwerkzeug**
Cutting tool
Outil de coupe

(30) Priorität: 21.08.2013 DE 102013109023
(43) Veröffentlichungstag der Anmeldung: 25.02.2015
(73) Patentinhaber: Krenn GmbH & Co. KG, 86356 Neusäß (DE)
(72) Erfinder: Jäger, Thomas, 86356 Neusäß (DE)
(74) Vertreter: Charrier Rapp & Liebau

(56) Entgegenhaltungen:
- EP-A1- 2 712 693
- CH-A5- 585 666
- DE-U1- 29 516 741
- US-A- 1 263 178
- US-A- 1 769 001
- US-A- 2 389 376
- US-A- 2 428 650
- US-B1- 8 127 454

## Beschreibung

Die Erfindung betrifft ein Schneidwerkzeug nach dem Oberbegriff des Anspruchs 1. Ein solches Werkzeug ist aus DE29516741 U1 bekannt. Derartige Schneidwerkzeuge, häufig auch als Schneidköpfe bezeichnet, dienen dem Abschneiden von meist zylindrischen bzw. länglichen Metallteilen, z.B. Bolzen, Gewindestangen, Stangen oder Rohren. Sie weisen eine Schneidklinge auf, welche in einen Aufnahmeraum für das Schneidgut einfahrbar ist, welches sich an einen gegenüber der Schneidklinge angeordneten Anschlag abstützt. An dem Anschlag 3 ist eine weitere Schneidklinge angeordnet, die entsprechend des Querschnitts des Strangs ausgeformt ist und diesen zusätzlich führt, sowie mit der einfahrbaren Schneidklinge 2 nach Art einer Schere zusammenwirkt. Die Betätigung solcher Schneidwerkzeuge bzw. Schneidköpfe erfolgt in der Regel elektrisch, hydraulisch oder elektrohydraulisch, da die erheblichen Kräfte zum Schneiden dickerer Metallbolzen oder Stangen nur auf mechanisch verstärktem Wege erzeugt werden können. Die Druckschrift DE 229313 zeigt eine Vorrichtung zum Vorschieben von stangenförmigen Körpern mit einer zugeordneten Schere zum Abschneiden von Stücken dieser stangenförmigen Körper. Die Vorrichtung eignet sich nur für stangenförmige Körper. Eine besondere Führung für diese Körper ist nicht vorgesehen.

Ferner zeigt die Druckschrift AT 387352 B eine tragbare Schneidvorrichtung zum gradfreien, rechtwinkeligen Trennen von Stäben und die DE 10 2010 061 191 A1 ein Verfahren zum Durchtrennen von Rohren sowie eine entsprechende Vorrichtung. Schließlich zeigt die US 1,769,001 ein Schneidgerät für Kabel.

Weitere Schneidwerkzeuge und entsprechende Vorrichtungen sind den Druckschriften EP 2 712 693 A1, CH 585 666 A5, US 2 389 376 A, DE 295 16 741 U1, US 1 263 178 A, US 2 428 650 A und US 8 127 454 B1 zu entnehmen.

Bekannte Schneidwerkzeuge, wie sie teilweise den oben genannten Druckschriften entnehmbar sind, weisen den Nachteil auf, dass sie beim Schneiden von Drahtseilen, Litzen oder allen aus vielen einzelnen Elementen zusammengesetzten Materialien, die in dieser Beschreibung und in den Ansprüchen als Stränge bezeichnet werden, unzuverlässig funktionieren, da sich die Einzelelemente der Stränge gegeneinander verschieben, gegenüber der Schnittrichtung verkanten und aus dem Aufnahmeraum herausrutschen können, so dass ein sauberer Schnitt nicht möglich ist oder die feste Schneidklinge zerstört. Zum Schneiden derartiger Stränge, welche in Gestalt von Spannstahlseilen und -drähten zur Aufnahme von Zugkräften in Bauwerken, vor allem beim Turmbau von Windkraftanlagen, verwendet werden, ist es daher notwendig, sogenannte Winkelschleifer einzusetzen und die Stränge zu durchtrennen. Dies hat wiederum den Nachteil des Funkenflugs sowie des Verdampfens von Öl- und Fettschichten auf den Strängen, mit der Folge der Gefährdung der Arbeiter aufgrund der Funken bzw. der beim Verdampfen der Fettschichten entstehenden giften Gase und des erheblichen Rauches.

Es besteht somit die Aufgabe, ein Schneidwerkzeug so auszubilden, dass es sich besser für das Schneiden von Strängen eignet.

Gelöst wird diese Aufgabe mit dem kennzeichnenden Merkmal des Anspruchs 1. Vorteilhafte Ausgestaltungen sind den Unteransprüchen entnehmbar.

Ein Ausführungsbeispiel der Erfindung wird im Folgenden unter Bezugnahme auf die begleitenden Zeichnungen näher erläutert. Diese zeigen:
**Fig. 1****:** Eine perspektivische Darstellung des Schneidwerkzeugs vor dem Einsetzen der Führungsvorrichtung;
**Fig. 2****:** Einen Querschnitt entlang der Achse der Führungsvorrichtung, gesehen aus Richtung A aus Fig.1;
**Fig. 3****:** Eine Darstellung gemäß Fig. 1 mit Achse der Führungsvorrichtung 4 in Zeichenebene;
**Fig. 4****:** Eine Darstellung gemäß Fig. 1 und Fig. 2 mit Achse der Führungsvorrichtung 4 senkrecht zur Zeichenebene;
**Fig. 5****:** Eine Darstellung gemäß Fig. 1 bei eingesetzter Führungsvorrichtung;
**Fig. 6****:** Einen Querschnitt entlang der Achse der Führungsvorrichtung, gesehen aus Richtung A aus Fig. 5;
**Fig. 7****:** Eine Darstellung gemäß Fig. 5 mit Achse der Führungsvorrichtung in Zeichenebene;
**Fig. 8****:** Eine Darstellung gemäß Fig. 5 und 7 mit Achse der Führungsvorrichtung senkrecht zur Zeichenebene;

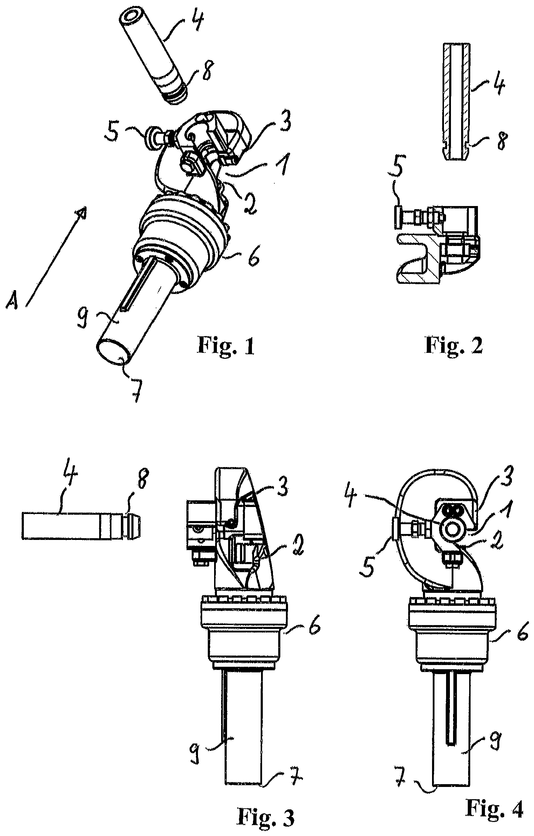

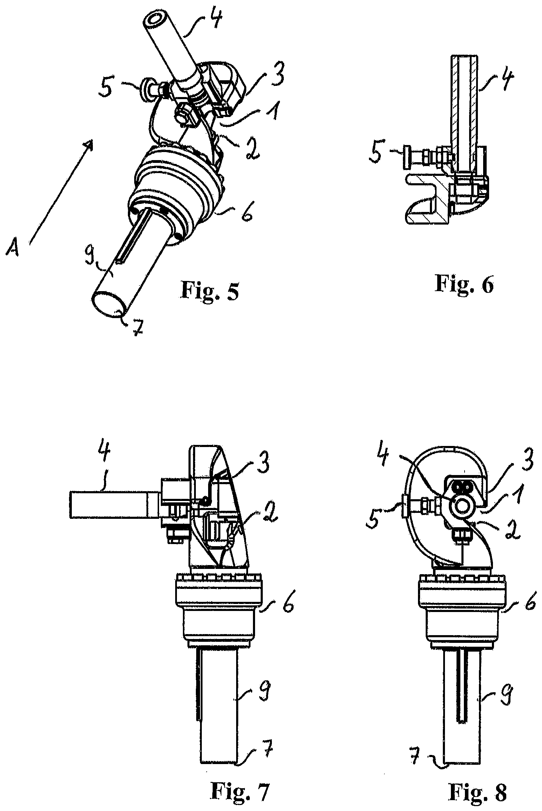

In sämtlichen Figuren ist ein und dasselbe Schneidwerkzeug aus verschiedenen Perspektiven und unmittelbar vor dem Einsetzen einer Führungsvorrichtung (Fig. 1-4) bzw. bei eingesetzter Führungsvorrichtung (Fig. 5-8) dargestellt.

Das dargestellte Schneidwerkzeug besteht aus einem auch als Zylinder 6 bezeichneten Gehäuse, mit einer in Richtung A, dargestellt in den Fig. 1 und 5, verlaufenden zentralen Achse, über welche auch die Beaufschlagung des Schneidwerkzeugs mit Hydraulikflüssigkeit erfolgt. Über den sich an die zentrale Achse anschließenden Einlass 7 des Aufnahmerohrs 9 des Zylinders 6 findet der Anschluss des Schneidwerkzeugs über (nicht dargestellte) Schlauchverbindungen an eine (ebenfalls nicht dargestellte) Hydraulikpumpe statt. An der diesem Einlass 7 des Aufnahmerohrs 9 gegenüberliegenden Seite des Zylinders 6 befindet sich die einfahrbare Schneidklinge 2, welche austauschbar gestaltet ist und aus einem sehr harten Material, insbesondere gehärtetem Stahl, besteht. Die Schneidklinge 2 ist -hydraulisch betätigt - in Richtung der zentralen Achse A des Zylinders 6 ein- und ausfahrbar, wobei das Ausfahren der Schneidklinge 2 eine Bewegung in Richtung auf den zur Aufnahme des Schneidguts vorgesehenen Aufnahmeraums 1 bedeutet. An diesen Aufnahmeraum 1 schließt sich ein Anschlag 3 an, der C- bzw. U-förmig gestaltet ist und eine (nicht dargestellte) zusätzliche Ausformung zur Aufnahme des zu schneidenden Strangs aufweist, und eine seitliche Zugänglichkeit des Aufnahmeraums 1 ermöglicht wird. Der Anschlag 3 weist eine zweite, feste Schneidklinge auf, gegen welche die einfahrbare Schneidklinge 2 schert, wenn sie in Richtung auf das Schneidgut und daran vorbei bewegt wird. Der Anschlag 3 fixiert ferner das Schneidgut gegenüber der Schneidklinge 2.

An den Aufnahmebereich 1 ist gemäss der Erfindung eine rohrförmige Führungsvorrichtung 4 angeschlossen, welche mit dem Schneidwerkzeug über eine Rastbolzenverbindung 5 verbindbar ist. In den Fig. 1-4 ist die Anordnung der Führungsvorrichtung 4 bezüglich des Schneidwerkzeugs im Sinne einer Explosionsdarstellung wiedergegeben, die Führungsvorrichtung 4 ist also noch nicht mit dem Schneidwerkzeug verbunden, sondern unmittelbar vor dem Einfügen in das Schneidwerkzeug dargestellt. Die Führungsvorrichtung 4 ist rohrförmig ausgebildet und besteht vorzugsweise aus Metall. Sie weist eine Nut 8 auf, über welche nach Einsetzen der Führungsvorrichtung 4 in das Schneidwerkzeug eine Klemmverschraubung des Schneidwerkzeugs eingreift, so dass die Führungsvorrichtung 4 fest und formschlüssig mit dem Schneidwerkzeug verbunden ist. Dieser Zustand ist in den Fig. 5-8 dargestellt.

Wie den Figuren zu entnehmen ist, ist die Achse der rohrförmigen Führungsvorrichtung 4 senkrecht zur zentralen Achse A des Zylinders 6 und damit auch senkrecht zur Bewegungsrichtung der Schneidklinge 2 angeordnet. Die Führungsvorrichtung 4 endet im eingebauten Zustand vor der Schneidebene der Schneidklinge 2 und der festen Schneidklinge am Anschlag 3.

Zum Betrieb des Schneidwerkzeugs wird dieses in der Regel auf einem (nicht dargestellten) Ständer positioniert, der höhenverstellbar ist und auf die gewünschte Länge der verbleibenden Litzenenden (sofern diese über einen Betonturm senkrecht verlaufen) eingestellt wird. Anschließend wird das Schneidwerkzeug grob zu der zu schneidenden Litze bzw. dem zu schneidenden Strang positioniert. Anschließend wird die bis dahin ausgeklinkte Führungsvorrichtung 4 auf den zu schneidenden Strang gesteckt und anschließend (also bei eingefügtem Strang) mit der Rastbolzenverbindung 5 mit dem Schneidwerkzeug verbunden. Dieser Vorgang kann fast blind durchgeführt werden, was bei den häufig schlechten Lichtverhältnissen an der Baustelle von Vorteil ist, wie z.B. im Kellergeschoß einer Windkraftanlage.

Nachdem die Führungsvorrichtung 4 mit dem hindurch laufenden Strang wieder in das Schneidwerkzeug eingesetzt worden ist, verläuft der Strang entlang der Achse der Führungsvorrichtung 4 und damit exakt senkrecht zur Bewegungsrichtung A der Schneidklinge 2. Daraufhin wird die Schneidklinge 2 hydraulisch auf den zu schneidenden Strang bzw. in Richtung des Anschlags 3 des Schneidwerkzeugs ausgefahren und durchschneidet den Strang. Aufgrund der Führung des Strangs innerhalb der Führungsvorrichtung 4 wird jedes Verkanten vermieden. Es erfolgt ein sauberer orthogonaler Schnitt durch den Strang und die Gefahr einer Beschädigung oder eines Bruches der Schneidklinge 2 wird vermieden oder zumindest sehr stark herabgesetzt.

Das erfindungsgemäße Schneidwerkzeug kann auch auf andere Weise, z. B. pneumatisch oder manuell betätigt werden. Ferner können auch andere Materialien, insbesondere Verbundmaterialien für den Schneidkopf und auch für die Führungsvorrichtung verwendet werden. Darüber hinaus ist es möglich, die Führungsvorrichtung starr mit dem Schneidwerkzeug zu verbinden, was dann eine andere Handhabung erfordert und insbesondere dann möglich ist, wenn das Schneidwerkzeug manuell geführt wird und nicht auf einem Ständer positioniert ist.

## Patentansprüche

1. Schneidwerkzeug zum Schneiden von Strängen mit einem Aufnahmebereich (1) für den Strang, einer senkrecht zum Verlauf des Strangs in diesen Aufnahmebereich (1) einfahrbaren Schneidklinge (2) und einem gegenüber der Schneidklinge (2) liegenden Anschlag (3), sowie eine sich an den Aufnahmebereich (1) anschließende und mit dem Schneidwerkzeug fest verbundene Führungsvorrichtung (4) für den Strang, **dadurch gekennzeichnet, dass** die Führungsvorrichtung (4) rohrförmig ist und als Metallrohr ausgebildet ist, welches mit dem Schneidwerkzeug lösbar verbunden ist und die Verbindung zwischen dem Metallrohr und dem Schneidwerkzeug durch einen federnden Rastbolzen (5) hergestellt ist.

2. Schneidwerkzeug nach Anspruch 1, **dadurch gekennzeichnet, dass** die Schneidklinge (2) durch hydraulische Betätigung ausfahrbar ist.

3. Schneidwerkzeug nach einem der voranstehenden Ansprüche, **dadurch gekennzeichnet, dass** der Anschlag (3) eine weitere Schneidklinge aufweist, welche mit der einfahrenden Schneidklinge (2) schert.

## Claims

1. Cutting tool for cutting strands having a receiving region (1) for the strand, a cutting blade (2) which can be moved into this receiving region (1) vertically to the path of the strand and a stop (3) lying opposite the cutting blade (2), as well as a guide device (4) for the strand which follows the receiving region (1) and is firmly connected to the cutting tool, **characterised in that** the guide device (4) is tubular and is formed as a metal tube which is releasably connected to the cutting tool and the connection between the metal tube and the cutting tool is produced by a resilient locking bolt (5).

2. Cutting tool according to claim 1, **characterised in that** the cutting blade (2) can be moved out by hydraulic actuation.

3. Cutting tool according to one of the preceding claims, **characterised in that** the stop (3) has a further cutting blade which shears with the cutting blade (2) which is moving in.

## Revendications

1. Outil de coupe pour couper des barres avec une zone de réception (1) pour la barre, une lame de coupe (2) pouvant être rentrée perpendiculairement à l'étendue de la barre dans cette zone de réception (1) et une butée (3) se trouvant en face de la lame de coupe (2) ainsi qu'un dispositif de guidage (4) pour la barre contigu à la zone de réception (1) et raccordé fixement à l'outil de coupe, **caractérisé en ce que** le dispositif de guidage (4) est tubulaire et est réalisé en tant que tube métallique qui est raccordé de manière amovible à l'outil de coupe et le raccordement entre le tube métallique et l'outil de coupe est établi par un boulon d'encliquetage (5) élastique.

2. Outil de coupe selon la revendication 1, **caractérisé en ce que** la lame de coupe (2) peut être sortie par actionnement hydraulique.

3. Outil de coupe selon l'une quelconque des revendications précédentes, **caractérisé en ce que** la butée (3) présente une autre lame de coupe qui cisaille avec la lame de coupe (2) pouvant rentrer.
